# EUROPÄISCHE PATENTSCHRIFT

(11) **EP 4 493 424 B1**
(45) Veröffentlichungstag und Bekanntmachung des Hinweises auf die Patenterteilung: **23.07.2025**
(21) Anmeldenummer: 23711975.5
(22) Anmeldetag: 14.03.2023
(51) Int. Cl.: B60K 1/00, B60K 11/02

(54) **ANTRIEBSVORRICHTUNG FÜR EINE FAHRZEUGACHSE**
DRIVE DEVICE FOR A VEHICLE AXLE
DISPOSITIF D'ENTRAÎNEMENT POUR UN ESSIEU DE VÉHICULE

(30) Priorität: 17.03.2022 DE 102022106305
(43) Veröffentlichungstag der Anmeldung: 22.01.2025
(73) Patentinhaber: AUDI AG, 85057 Ingolstadt (DE)
(72) Erfinder: WEBER, Andreas, Ingolstadt 85055 (DE); GLOEDE, Harald, 85104 Pförring (DE); RÖTHLINGSHÖFER, Frank, 85055 Ingolstadt (DE); WEBER, Korbinian, 85049 Ingolstadt (DE); HOLZAPFEL, Christian, 85101 Lenting (DE)
(74) Vertreter: Bierschneider, Walter
(86) Internationale Anmeldenummer: PCT/EP2023/056406
(87) Internationale Veröffentlichungsnummer: WO 2023/174904

(56) Entgegenhaltungen:
- WO-A1-2021/079664
- WO-A1-2021/140807
- DE-B4- 102020 125 112
- DE-T5- 112019 004 896
- US-B2- 10 886 814

## Beschreibung

Die Erfindung betrifft eine Antriebsvorrichtung für eine elektrifizierte Fahrzeugachse eines zweispurigen Fahrzeugs nach dem Oberbegriff des Anspruches 1, wie aus DE102020 125112 bekannt ist.

Eine elektrifizierte Fahrzeugachse für ein zweispuriges Kraftfahrzeug weist eine Elektromaschine auf, die über ein Getriebe auf Flanschwellen abtreibt, die jeweils zu einem Fahrzeugrad führen. Die Elektromaschine und das Getriebe sind Bestandteile einer gattungsgemäßen Antriebsvorrichtung, die über eine Dreipunktlagerung oder eine Vierpunktlagerung zum Beispiel auf einem Hilfsrahmen der Fahrzeugkarosserie abgestützt ist.

Die gattungsgemäße Antriebsvorrichtung weist einen bauraumintensiven Gehäuseaufbau auf, dessen Gehäuseteile aufgrund ihrer komplexen Bauteilgeometrie nur eingeschränkt druckgussfähig sind.

Aus der DE 10 2019 112 677 A1 ist ein Hydraulikversorgungssystem für ein Fahrzeug bekannt. Aus der DE 10 2019 205 758 A1 ist eine Getriebeanordnung für ein Kraftfahrzeug bekannt. Aus der DE 10 2019 218 982 A1 ist eine Antriebsvorrichtung für ein Hybridfahrzeug bekannt.

Die Aufgabe der Erfindung besteht darin, eine Antriebsvorrichtung für eine elektrifizierte Fahrzeugachse eines zweispurigen Fahrzeugs bereitzustellen, deren Gehäuseaufbau im Vergleich zum Stand der Technik kompakter gestaltet ist sowie einfacher herstellbar ist.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung aus, die eine Elektromaschine aufweist, die über ein Getriebe auf Flanschwellen abtreibt, die zu Fahrzeugrädern geführt sind. Die Antriebsvorrichtung weist zudem ein Schmier- und/oder Kühlmittelmodul auf, das die Elektromaschine und/oder das Getriebe mit Kühl-/Schmiermittel versorgt. Gemäß dem kennzeichnenden Teil des Anspruches 1 weist die Antriebsvorrichtung einen modularen, dreiteiligen Gehäuseaufbau auf, bei dem ein Modulgehäuse, ein Statorgehäuse der Elektromaschine und ein Getriebegehäuse als voneinander separate Metallgussteile, insbesondere Druckgussteile, bereitgestellt sind und zu einem Antriebsaggregat zusammengefügt sind. Die Gehäuseteile des Antriebsaggregats sind allesamt mit einer Bauteilgeometrie ausgelegt, die gussfähig ist. Zudem sind die Gehäuseteile, das heißt das Statorgehäuse, das Getriebegehäuse und das Modulgehäuse im Vergleich zum Stand der Technik zu einer wesentlich kompakteren Baueinheit zusammengefügt.

In einer technischen Umsetzung kann das Statorgehäuse über eine Flanschverbindung am Getriebegehäuse angeflanscht sein. Das Statorgehäuse und das Getriebegehäuse können einen Inneneckbereich aufspannen, in dem das Modulgehäuse des Kühl- und/oder Schmiermittelmoduls bauraumgünstig positionierbar ist. Im Zusammenbauzustand sind das Statorgehäuse und die Flanschwellen um einen Axialabstand zueinander beabstandet. Im Hinblick auf eine kompakte Gestaltung des Aggregats ist es bevorzugt, wenn das Modulgehäuse eine Wellendurchführung aufweist, durch die sich eine der Flanschwellen erstreckt. In diesem Fall kann der im Modulgehäuse befindliche Öltank als ein Ringraum ausgebildet sein, der sich um die Flanschwelle erstreckt.

Das Getriebegehäuse kann im Hinblick auf eine einfache Montage/Demontage aus zwei Gehäuseteilen aufgebaut sein, die axial hintereinander angeordnet sein können. In diesem Fall weist das Getriebegehäuse ein Zwischengehäuse und einen Gehäusedeckel auf. An einer Seite des Zwischengehäuses kann sowohl das Statorgehäuse als auch das Modulgehäuse angeflanscht sein. Demgegenüber kann der Gehäusedeckel an die axial gegenüberliegende Zwischengehäuseseite angeflanscht sein und den Getriebegehäuse-Innenraum schließen.

Im Zusammenbauzustand sind das Statorgehäuse und das Modulgehäuse voneinander axial beabstandet. Um Bauteilvibrationen während des Fahrbetriebs zu vermeiden, ist es bevorzugt, wenn das Statorgehäuse und das Modulgehäuse, insbesondere auf deren getriebefernen Seite, über ein Stützteil miteinander kraftübertragend verbunden sind.

In einer konkreten Ausführungsvariante kann die Elektromaschine im Quereinbau in der Fahrzeugachse verbaut sein. In diesem Fall kann das Statorgehäuse der Elektromaschine in der Fahrzeugquerrichtung mit dem Getriebegehäuse axial verlängert sein. Das Antriebsaggregat kann zudem in einer Dreipunktlagerung über insgesamt drei Aggregatelager in der Fahrzeugkarosserie abgestützt sein.

Erfindungsgemäß ist das Modulgehäuse unmittelbar neben dem Statorgehäuse angeordnet. Im Modulgehäuse ist das Öl-Volumen für eine Trockensumpf-Schmierung aufgenommen. Gleichzeitig werden hier Ölleitungen und sowie die in den Ölkreislauf geschalteten Bauteile aufgenommen, nämlich Öl-Wasser-Wärmetauscher/ Ölfilter/ Ölpumpe. Mit der Erfindung ist ein Gehäuseaufbau erzielbar, der eine im Vergleich zum Stand der Technik eine niedrige Bauhöhe aufweist sowie eine hohe Effizienz ermöglicht (das heißt Verminderung von Pantsch-Verlusten zu drehenden Teilen).

Aufgrund der Anordnung der Leistungselektronik auf der Aggregate-Oberseite können sämtliche Aggregatelager seitlich am Zwischengehäuse, am Getriebedeckel sowie am Statorgehäuse positioniert werden. Zudem ergeben sich bei einer Anordnung der Leistungselektronik auf der Aggregate-Oberseite keine Krafteinleitungen auf die empfindlichen Teile innerhalb der Leistungselektronik (das heißt Pulswechselrichter). Das erfindungsgemäße Antriebsaggregat ist als Modul prüfbar und montierbar. Das Antriebsaggregat ist aufgrund seiner kompakten Ausführung sowohl für den Verbau in der Vorderachse als auch für den Verbau in der Hinterachse geeignet. Ferner erfolgt die Krafteinleitung der Reaktionskräfte aus dem Antrieb von den Motorstützen in das Gehäuse direkt, wodurch Schraubebenen entfallen, sowie mit geringem Hebelarm (dadurch können Versteifungsrippen deutlich geringer dimensioniert werden). Das Statorgehäuse kann im Vergleich zum Getriebegehäuse und zum Modulgehäuse in einer anderen Al-Legierung mit höherer Dehnung hergestellt werden. Dadurch ist es nicht mehr erforderlich, dass kostspielige Legierungen in Bereichen verwendet werden, die höhere Dehnung konzeptbedingt nicht benötigen.

Aufgrund der kompakten Bauweise des Antriebsaggregats ist das für das Package relevante Boxmaß gering und wird dieses gut ausgenutzt. Von daher verbleibt kaum umbauter Raum, der nicht genutzt wird. Die Verwendung des Stützteils zwischen dem Statorgehäuse und dem Modulgehäuse führt im Fahrbetrieb zu einer Akustikverbesserung. Die im Getriebe stattfindende Drehmomentwandlung und die sich daraus ergebenden Lagerabstützkräfte würden ohne Stützteil-Verbau zu einer Schwingung führen. Diese kann durch das als Schubfeld wirkende Stützteil in Hochrichtung sowie in Querrichtung sehr effektiv reduziert werden, wodurch sich die die Akustik stark verbessert. Gleichzeitig wird die Montage in Fahrzeuglängsrichtung nicht behindert und die Längentoleranz kann sehr gut ausgeglichen werden.

Mit der erfindungsgemäßen kompakten Bauweise ergibt sich eine in etwa würfelförmige Package-Geometrie. Zudem hat der modulare Aufbau Vorteile in der Sequenzierung der Montage: So können Unterbaugruppen parallel vormontiert werden, bevor diese zum Antriebsaggregat zusammengebaut werden. Ferner ist die Zugänglichkeit bei der Montage gewährleistet. Außerdem kann ein Prüfen von Untereinheiten vor dem Zusammenbau des Antriebsaggregats und somit eine Sicherung der Qualität durchgeführt werden. Ferner bietet der erfindungsgemäße Gehäuseaufbau einen hohen Integrationsgrad in einzelne Bauteile (Ölmodul, Zwischengehäuse). So können Ölleitungen für Druck-/Saugöl integriert werden. Die einzelnen Gehäuse können zudem gußgerecht konstruiert sein. Mit dem erfindungsgemäßen Gehäuseaufbau ergibt sich zudem eine hohe Steifigkeit, da für die Zahnradlagerung mit den hohen Lasten ein Schubfeld im Getriebegehäuse und Zwischengehäuse ausgebildet werden kann.

Für einen einwandfreien Betrieb ist eine betriebssichere Momentenabstützung von Reaktionskräften von Bedeutung. Hierzu kann die Dreipunktlagerung zwei getriebeseitige Aggregatelager aufweisen, über die das Getriebegehäuse in der Fahrzeugkarosserie abgestützt ist. Die beiden getriebeseitigen Aggregatelager sind mit Bezug auf die Flanschwellen-Achse in der Fahrzeuglängsrichtung auf gegenüberliegenden Seiten angeordnet, wodurch in beiden Flanschwellen-Drehrichtungen eine Momentenabstützung bereitgestellt ist.

In einer technischen Umsetzung kann der Gehäusedeckel und das Zwischengehäuse weisen jeweils eine Lagerwand aufweisen. Die Lagerwände des Gehäusedeckels und des Zwischengehäuses liegen einander in der Fahrzeugquerrichtung axial gegenüber. Zudem weisen die Lagerwände jeweils Lagerstellen für die Getriebewellen sowie für die Flanschwellen auf. Für eine stabile Drehlagerung der Getriebewellen sowie der Flanschwellen sind der Gehäusedeckel sowie das Zwischengehäuse entsprechend bauteilsteif realisiert. Um eine betriebssichere Abstützung des Antriebsaggregats zu erzielen, ist es bevorzugt, wenn von den beiden getriebeseitigen Aggregatelagern ein erstes getriebeseitiges Aggregatelager am Gehäusedeckel ausgebildet ist, während das zweite getriebeseitige Aggregatelager am Zwischengehäuse ausgebildet ist. Im Gegensatz zu den beiden getriebeseitigen Aggregatelagern ist ein drittes Aggregatelager unmittelbar am Statorgehäuse angeformt, um dessen Bauteilgewicht betriebssicher abzustützen.

Für eine einwandfreie Drehlagerung der Getriebewellen sowie der Flanschwellen sind die Lagerwände des Gehäusedeckels und des Zwischengehäuses mit entsprechendem Materialaufwand bauteilsteif ausgeführt. In einer bevorzugten Ausführungsform kann das erste getriebeseitige Aggregatelager in einer Lagerwand-Ebene des Gehäusedeckels liegen, während das zweite getriebeseitige Aggregatelager in einer Lagerwand-Ebene des Zwischengehäuses liegen kann. Auf diese Weise wirken die Lagerwände des Gehäusedeckels und des Zwischengehäuses in Doppelfunktion auch als Schubfelder, in denen während des Fahrbetriebs deformationsfrei Reaktionskräfte eingeleitet werden können, wodurch eine äußerst bauteilsteife Momentenabstützung erzielt werden kann.

Infolge der Ausbildung der beiden Aggregatelager unmittelbar am Getriebegehäuse ergibt sich, in der Fahrzeugquerrichtung betrachtet, ein vergleichsweise geringer Querversatz (Hebelarmlänge) zum Achsdifferenzial, wodurch zum Beispiel Durchbiegungen oder Verwindungen des Antriebsaggregats aufgrund eingeleiteter Reaktionskräfte konstruktiv einfach unterbunden werden können.

In einer konstruktiv einfachen Ausführungsvariante kann jedes der Aggregatelager als ein Gummi-Metall-Hülsenlager ausgebildet sein, das in einem Befestigungsauge des Getriebegehäuses und/oder des Statorgehäuses eingepresst ist. Das Befestigungsauge kann jeweils materialeinheitlich und einstückig am Getriebegehäuse beziehungsweise am Statorgehäuse angeformt sein. Um eine besonders wirkungsvolle Momentenabstützung zu erzielen, ist es bevorzugt, wenn die Lagerachsen der beiden getriebeseitigen Aggregatelager sowie insbesondere zusätzlich des statorgehäuseseitigen Aggregatelagers achsparallel zur Flanschwelle-Achse ausgerichtet sind.

Nachfolgend ist ein Ausführungsbeispiel der Erfindung anhand der beigefügten Figuren beschrieben.

Es zeigen:
- Fig. 1: in einem Blockschaltdiagramm eine Antriebsvorrichtung für eine elektrifizierte Fahrzeugachse eines Fahrzeugs;
- Fig. 2: das Antriebsaggregat in einer Schnittdarstellung;
- Fig. 3: in einer schematischen Darstellung den Gehäuseaufbau des Antriebsaggregats.

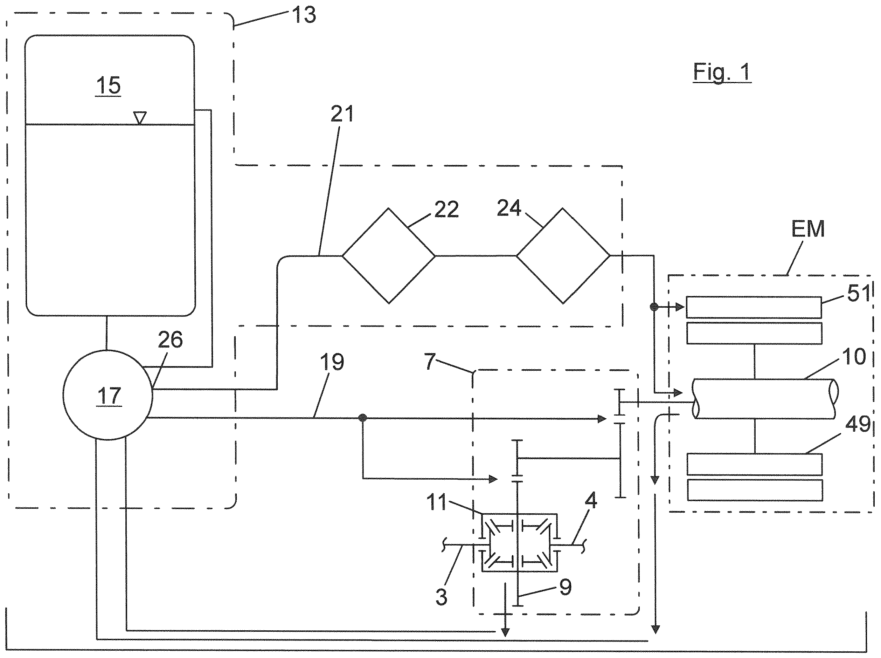

In der Figur 1 ist in einem vereinfachten Blockschaltdiagramm eine Antriebsvorrichtung für eine Fahrzeugachse eines zweispurigen Fahrzeugs gezeigt. Die Fahrzeugachse weist eine Elektromaschine EM auf, die im Quereinbau achsparallel zu den, zu den Fahrzeugrädern geführten Flanschwellen 3, 4 angeordnet ist. Die Rotorwelle 10 der Elektromaschine EM ist über ein Getriebe 7 in trieblicher Verbindung mit den beiden Flanschwellen 3, 4. In der Figur 1 weist das Getriebe 7 eine doppelte Stirnradstufe auf, die in trieblicher Verbindung mit einem eingangsseitigen Zahnrad 9 eines Achsdifferenzials 11 ist. Das Achsdifferenzial 11 treibt beidseitig auf die zu den Fahrzeugrädem geführten Flanschwellen 3, 4 ab.

Zudem weist die Antriebsvorrichtung ein Ölmodul 13 auf, dessen Aufbau nachfolgend nur insoweit beschrieben ist, als es für das Verständnis der Erfindung erforderlich ist. Demzufolge weist das Ölmodul 13 einen Öltank 15 auf, der über eine Saugleitung mit einer Mehrstufenpumpe 17 verbunden ist. Von der Mehrstufenpumpe 17 führt eine Elektromaschinenversorgungsleitung 21 zur Elektromaschine EM, um diese mit Öl zu versorgen. Von der Elektromaschine EM wird Öl über eine Rückführleitung in Richtung Mehrstufenpumpe 17 abgesaugt. In der Elektromaschinenversorgungsleitung 21 ist ein Wärmetauscher 22 und ein Ölfilter 24 angeordnet, die ebenfalls Bestandteile des Ölmoduls 13 sind.

Zusätzlich führt eine Getriebeversorgungsleitung 19 von der Mehrstufenpumpe 17 zum Getriebe 7. Über die Getriebeversorgungsleitung 19 wird Öl zu Zahneingriffsstellen des Getriebes 7 geführt. Das Öl tropft von den Zahneingriffsstellen ab, sammelt sich in einem Ölsumpf und wird von dort über eine weitere Rückführleitung in Richtung Mehrstufenpumpe 17 abgesaugt.

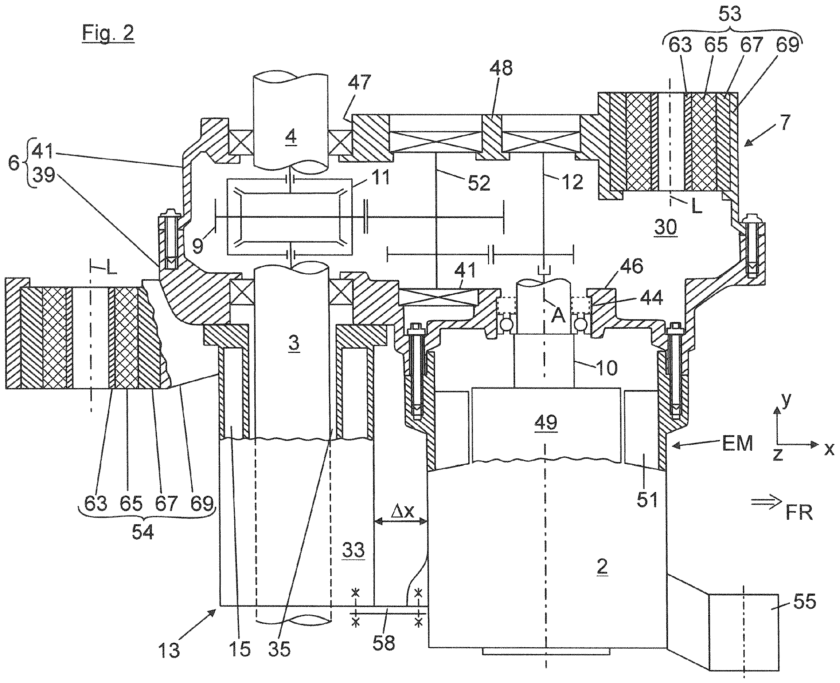

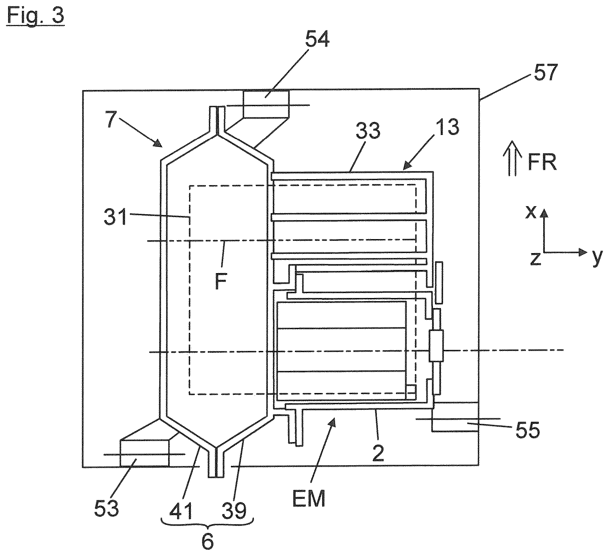

In der Figur 2 oder 3 sind die Elektromaschine EM, das Getriebe 7 und das Ölmodul 13 zu einem Antriebsaggregat zusammengefügt. In dem Antriebsaggregat sind die Elektromaschine EM und das Ölmodul 13 achsparallel angeordnet sowie zueinander über einen Axialabstand Δx (Fig. 2) beabstandet. Die Elektromaschine EM weist ein zylindrisches Statorgehäuse 2 auf, das in der Fahrzeugquerrichtung y mit einem Getriebegehäuse 6 axial verlängert ist. Zudem sind das Statorgehäuse 2 der Elektromaschine EM und das Modulgehäuse 33 des Ölmoduls 13 über Flanschverbindungen am Getriebe 7 angeflanscht. Der Gehäuseaufbau des Antriebsaggregats ist in der Fig. 3 skizzenhaft in einer Ansicht von oben gezeigt. Demnach ist der Elektromaschine 1 ist eine (mit gestrichelter Linie angedeutete) Leistungselektronik 31 zugeordnet. Diese befindet sich auf der Oberseite des Antriebsaggregats.

Das Ölmodul 13 weist in der Figur 2 oder 3 ein Modulgehäuse 33 auf. Das Modulgehäuse 33 ist, wie auch das Getriebegehäuse 6 und das Statorgehäuse 2, als ein Gussbauteil ausgeführt ist. Am Modulgehäuse 33 sind die Mehrstufenpumpe 17, der Wärmetauscher 22 und der Ölfilter 24 montiert. Der Öltank 15 ist im Modulgehäuse 33 als ein in der Fig. 2 gezeigter Ringraum (Fig. 2) integriert, der eine Wellendurchführung 35 im Modulgehäuse 33 begrenzt. Durch die Wellendurchführung 35 ist die Flanschwelle 3 vom Getriebe 7 zu einem der Fahrzeugräder geführt.

Wie aus der Fig. 2 weiter hervorgeht, sind das Statorgehäuse 2 und das Modulgehäuse 33 an ihrer getriebefernen Seite über ein Stützteil 58 miteinander kraftübertragend verbunden sind, mittels dem Bauteilschwingungen reduzierbar sind

Gemäß der Figur 2 oder 3 ist das Getriebegehäuse 6 zweiteilig aufgebaut mit einem Zwischengehäuse 39 und einem Gehäusedeckel 41. Das Zwischengehäuse 39 ist in Axialrichtung zwischen dem Modulgehäuse 33 und dem Gehäusedeckel 41 positioniert.

Im Getriebegehäuse 6 sind sowohl die Stirnradstufe als auch das Achsdifferenzial 11 angeordnet. Der Gehäusedeckel 41 schließt in Axialrichtung den Getriebe-Innenraum 30 (Fig. 2). In der Fig. 2 ist der Getriebe-Innenraum 30 in der Fahrzeugquerrichtung y durch eine Lagerwand 46 des Zwischengehäuses 39 und durch eine Lagerwand 48 des Gehäusedeckels 41 axial begrenzt. Die Lagerwand 46 des Zwischengehäuses 39 weist eine Lageröffnung 44 auf, in der die Rotorwelle 10 der Elektromaschine EM drehgelagert ist. Außerdem weist die Lagerwand 46 des Zwischengehäuses 39 einen Wellendurchtritt 35 auf, in der die linke Flanschwelle 3 drehgelagert ist. Ferner ist die Lagerwand 46 der Zwischengehäuses 39 mit einer Drehlagerstelle für eine Getriebe-Zwischenwelle 52 ausgebildet. Die Lagerwand 48 des Gehäusedeckels 41 weist zwei Lageröffnungen für eine Getriebeeingangswelle 12 und für die Getriebe-Zwischenwelle 52 sowie einen Wellendurchtritt 47 auf, in der die rechte Flanschwelle 4 drehgelagert ist.

In der Fig. 3 ist eine Einbaulage des Antriebsaggregats angedeutet. Demzufolge ist das Antriebsaggregat in einer Dreipunktlagerung mit insgesamt drei Aggregatelager 53, 54, 55 auf einem grob schematisch angedeuteten Hilfsrahmen 57 abgestützt. Der Hilfsrahmen 57 weist in der Fig. 3 zwei seitliche Hilfsrahmen-Längsträger auf, die fahrzeugvorne und fahrzeughinten jeweils mit Hilfsrahmen-Querträgern verbunden sind.

Die Dreipunktlagerung weist zwei getriebeseitige Aggregatelager 53, 54 auf, über die das Getriebegehäuse 6 auf dem Hilfsrahmen 57 abgestützt ist. Die beiden getriebeseitigen Aggregatelager 53, 54 sind mit Bezug auf die Flanschwellen-Achse F (Fig. 2) in der Fahrzeuglängsrichtung x auf gegenüberliegenden Seiten, das heißt fahrzeugvorne und fahrzeughinten, angeordnet. Beispielhaft ist in der Fig. 3 das erste getriebeseitige Aggregatelager 53 am hinteren Hilfsrahmen-Querträger angebunden, während das zweite getriebeseitige Aggregatelager 54 am vorderen Hilfsrahmen-Querträger angebunden ist. Das dritte Aggregatelager 55 ist dagegen am Statorgehäuse 2 angeordnet, wodurch in erster Linie die Elektromaschine EM abgestützt wird, in deren Bereich sich der Schwerpunkt des Antriebsaggregats befindet.

Im Fahrzeugbetrieb werden über die Flanschwellen 3, 4 Reaktionskräfte von den Fahrzeugrädern in das Achsdifferenzial 11 und von dort weiter in das restliche Antriebsaggregat 1 eingeleitet. Für eine stabile Momentenabstützung der Reaktionskräfte sind die beiden getriebeseitigen Aggregatelager 53, 54 in der Fahrzeugquerrichtung y betrachtet mit äußerst geringem Querversatz zum Achsdifferenzial 11 positioniert.

Die Aggregatelager 53, 54, 55 sind jeweils als Gummi-Metall-Hülsenlager realisiert, wie sie in der Fig. 2 angedeutet sind. Demzufolge weist jedes der gezeigten Aggregatelager 53, 54 einen inneren, hülsenförmigen Lagerkern 63 auf, der über einen Elastomerkörper 65 mit einer Außenhülse 67 verbunden ist. Der radial innere Lagerkern 63 ist über einen nicht gezeigten Lagerbolzen an Lagerkonsolen des Hilfsrahmens 57 anbindbar. Die Lagerachsen L der beiden getriebeseitigen Aggregatelager 53, 54 sowie des statorgehäuseseitigen Aggregatelagers 55 sind gemäß der Fig. 2 jeweils in Fahrzeugquerrichtung y ausgerichtet.

Wie aus der Fig. 3 hervorgeht, ist das erste getriebeseitige Aggregatelager 53 am Gehäusedeckel 41 ausgebildet. Das erste getriebeseitige Aggregatelager 53 liegt zusammen mit der Lagerwand 48 des Gehäusedeckels 41 in einer gemeinsamen Ebene. Im Belastungsfall wirkt daher die Lagerwand 48 als ein bauteilsteifes Schubfeld. In gleicher Weise ist das zweite getriebeseitige Aggregatelager 54 am Zwischengehäuse 39 ausgebildet. Das zweite getriebeseitige Aggregatelager 54 liegt zusammen mit der Lagerwand 46 des Zwischengehäuses 27 in einer gemeinsamen Ebene, wodurch auch die Lagerwand 46 des Zwischengehäuses 39 im Belastungsfall als ein bauteilsteifes Schubfeld wirkt.

### BEZUGSZEICHENLISTE:

- 2: Statorgehäuse
- 3, 4: Flanschwellen
- 5: Rotorwelle
- 6: Getriebegehäuse
- 7: Getriebe
- 9: Eingangszahnrad
- 10: Rotorwelle
- 11: Achsdifferenzial
- 12: Getriebe-Eingangswelle
- 13: Ölmodul
- 15: Öltank
- 17: Mehrfachpumpe
- 19: Getriebeversorgungsleitung
- 21: Elektromaschinenversorgungsleitung
- 26: Pumpenauslass
- 30: Getriebe-Innenraum
- 31: Leistungselektronik
- 32: Ölfiltereinlass
- 33: Modulgehäuse
- 34: Ölfilterauslass
- 35: Wellendurchtritt
- 39: Zwischengehäuse
- 41: Gehäusedeckel
- 44: Lageröffnung
- 46: Lagerwand des Zwischengehäuses 39
- 47: Wellendurchtritt
- 48: Lagerwand des Getriebedeckels 41
- 49: Rotor
- EM: Elektromaschine
- Δx: Axialabstand
- 52: Zwischenwelle
- 51: Stator
- 53, 54, 55: Aggregatelager
- 57: Hilfsrahmen
- 58: Stützteil
- 63: innerer Lagerkern
- 65: Elastomerkörper
- 67: Außenhülse
- 69: Befestigungsauge
- L: Lagerachsen
- F: Flanschwellen-Achse

## Patentansprüche

1. Antriebsvorrichtung für eine elektrifizierte Fahrzeugachse eines Fahrzeugs, mit einer Elektromaschine (EM), die über ein Getriebe (7) auf Flanschwellen (3, 4) abtreibt, die zu Fahrzeugrädern geführt sind, und mit einem Kühl-/Schmiermodul (13), das die Elektromaschine (EM) und/oder das Getriebe (7) mit Kühl-/Schmiermittel versorgt, **dadurch gekennzeichnet, dass** die Antriebsvorrichtung einen modularen Gehäuseaufbau aufweist, bei dem ein Modulgehäuse (33) des Kühl- /Schmiermoduls (13), ein Statorgehäuse (2) der Elektromaschine (EM) und ein Getriebegehäuse (6) als voneinander separate Metallgussteile, insbesondere Druckgussteile, zu einem Aggregat zusammengefügt sind.

2. Antriebsvorrichtung nach Anspruch 1, **dadurch gekennzeichnet, dass** das Statorgehäuse (2) über eine Flanschverbindung am Getriebegehäuse (6) angeflanscht ist, und dass das Statorgehäuse (2) und das Getriebegehäuse (6) einen Inneneckbereich aufspannen, in dem das Modulgehäuse (33) angeordnet ist, und/oder dass das Modulgehäuse (33) eine Wellendurchführung (35) aufweist, durch die sich eine der Flanschwellen (3, 4) erstreckt.

3. Antriebsvorrichtung nach Anspruch 1 oder 2, **dadurch gekennzeichnet, dass** das Getriebegehäuse (6) aus zwei Gehäuseteilen aufgebaut ist, die axial hintereinander angeordnet sind, und zwar aus einem Zwischengehäuse (39) und einem Gehäusedeckel (41), und dass an einer Zwischengehäuseseite sowohl das Statorgehäuse (2) als auch das Modulgehäuse (33) angeflanscht sind, und dass an der axial gegenüberliegende Zwischengehäuseseite der Gehäusedeckel (41) angeflanscht ist und den Getriebegehäuse-Innenraum (40) schließt.

4. Antriebsvorrichtung nach einem der vorhergehenden Ansprüche, **dadurch gekennzeichnet, dass** das Statorgehäuse (2) und das Modulgehäuse (33) um einen Axialabstand (Δx) voneinander beabstandet sind, und dass insbesondere das Statorgehäuse (2) und das Modulgehäuse (33), insbesondere auf deren getriebefernen Seite, über ein Stützteil (58) miteinander kraftübertragend verbunden sind.

5. Antriebsvorrichtung nach einem der vorhergehenden Ansprüche, **dadurch gekennzeichnet, dass** die Elektromaschine (EM) im Quereinbau in der Fahrzeugachse angeordnet ist, und dass das Statorgehäuse (2) der Elektromaschine (EM) in der Fahrzeugquerrichtung (y) mit dem Getriebegehäuse (6) axial verlängert ist, und/oder dass das Aggregat in einer Dreipunktlagerung über drei Aggregatelager in der Fahrzeugkarosserie abgestützt ist.

6. Antriebsvorrichtung nach Anspruch 5, **dadurch gekennzeichnet, dass** das Zwischengehäuse (39) und der Gehäusedeckel (41) jeweils Lagerwände (46, 48) aufweisen, die einander axial gegenüberliegen, und dass insbesondere in den Lagerwänden (46, 48) des Zwischengehäuses (39) und des Gehäusedeckels (41) Getriebewellen (10, 12, 52) sowie Flanschwellen (3, 4) drehgelagert sind.

7. Antriebsvorrichtung nach Anspruch 5 oder 6, **dadurch gekennzeichnet, dass** das erste getriebeseitige Aggregatelager (53) am Gehäusedeckel (41) ausgebildet ist, dass das zweite getriebeseitige Aggregatelager (54) am Zwischengehäuse (39) ausgebildet ist, und dass das dritte Aggregatelager (55) am Statorgehäuse (2) ausgebildet ist.

8. Antriebsvorrichtung nach einem der vorhergehenden Ansprüche, **dadurch gekennzeichnet, dass** an der Oberseite des Antriebsaggregates die Leistungselektronik (31) der Elektromaschine (EM) angeordnet ist, die das Getriebegehäuse (6), das Modulgehäuse (33) und das Statorgehäuse (2) zumindest teilweise überdeckt.

9. Antriebsvorrichtung nach einem der vorhergehenden Ansprüche, **dadurch gekennzeichnet, dass** jedes der Aggregatelager (53, 54, 55) als ein Gummi-Metall-Hülsenlager ausgebildet ist, das in einem Befestigungsauge (69) des Getriebegehäuses (25) und/oder des Statorgehäuses (23) eingepresst ist, und dass die Befestigungsaugen der Aggregatelager (53, 54, 55) materialeinheitlich und einstückig am Statorgehäuse (2), am Zwischengehäuse (39) und am Gehäusedeckel (41) angeformt sind.

10. Antriebsvorrichtung nach einem der vorhergehenden Ansprüche, **dadurch gekennzeichnet, dass** am Modulgehäuse (33) eine Pumpeneinheit (17), ein Wärmetauscher (22), ein Ölfilter (24) und/oder ein Öltank (15) ausgebildet bzw. montiert sind, die Bestandteile eines Hydraulikkreises zur Kühlung/Schmierung der Elektromaschine (EM) und des Getriebes (7) ist.

## Claims

1. Drive device for an electrified vehicle axle of a vehicle, having an electric machine (EM) which outputs drive via a transmission (7) to flange shafts (3, 4) which are led to vehicle wheels, and having a cooling/lubrication module (13) which supplies coolant/lubricant to the electric machine (EM) and/or the transmission (7), **characterized in that** the drive device has a modular housing structure in which a module housing (33) of the cooling/lubrication module (13), a stator housing (2) of the electric machine (EM) and a transmission housing (6) are joined together as mutually separate metal cast parts, in particular die-cast parts, to form a unit.

2. Drive device according to Claim 1, **characterized in that** the stator housing (2) is flange-mounted on the transmission housing (6) via a flange connection, and **in that** the stator housing (2) and the transmission housing (6) span an inner corner region in which the module housing (33) is arranged, and/or **in that** the module housing (33) has a shaft lead-through (35) through which one of the flange shafts (3, 4) extends.

3. Drive device according to Claim 1 or 2, **characterized in that** the transmission housing (6) is constructed from two housing parts which are arranged axially one behind the other, specifically from an intermediate housing (39) and a housing cover (41), and **in that** both the stator housing (2) and the module housing (33) are flange-mounted on one intermediate-housing side, and **in that** the housing cover (41) is flange-mounted, and closes the transmission-housing interior space (40), on the axially opposite intermediate-housing side.

4. Drive device according to one of the preceding claims, **characterized in that** the stator housing (2) and the module housing (33) are spaced apart from one another by an axial distance (Δx), and **in that** in particular the stator housing (2) and the module housing (33) are connected to one another in a force-transmitting manner, in particular on their side remote from the transmission, via a supporting part (58).

5. Drive device according to one of the preceding claims, **characterized in that** the electric machine (EM) is arranged in a transversely installed manner in the vehicle axle, and **in that** the stator housing (2) of the electric machine (EM) is extended axially in the vehicle transverse direction (y) by the transmission housing (6), and/or **in that** the unit is supported with three-point mounting in the vehicle body via three unit bearings.

6. Drive device according to Claim 5, **characterized in that** the intermediate housing (39) and the housing cover (41) have respective bearing walls (46, 48), which are situated axially opposite one another, and **in that** transmission shafts (10, 12, 52) and flange shafts (3, 4) are mounted rotatably in particular in the bearing walls (46, 48) of the intermediate housing (39) and the housing cover (41).

7. Drive device according to Claim 5 or 6, **characterized in that** the first, transmission-side, unit bearing (53) is formed on the housing cover (41), **in that** the second, transmission-side, unit bearing (54) is formed on the intermediate housing (39), and **in that** the third unit bearing (55) is formed on the stator housing (2).

8. Drive device according to one of the preceding claims, **characterized in that** the power electronics (31) of the electric machine (EM) are arranged on the top side of the drive unit and at least partially cover the transmission housing (6), the module housing (33) and the stator housing (2).

9. Drive device according to one of the preceding claims, **characterized in that** each of the unit bearings (53, 54, 55) is in the form of a rubber/metal sleeve bearing which is pressed in a fastening eyelet (69) of the transmission housing (25) and/or of the stator housing (23), and **in that** the fastening eyelets of the unit bearings (53, 54, 55) are formed from the same material and in one piece on the stator housing (2), on the intermediate housing (39) and on the housing cover (41).

10. Drive device according to one of the preceding claims, **characterized in that** a pump unit (17), a heat exchanger (22), an oil filter (24) and/or an oil tank (15) are/is formed or mounted on the module housing (33) and are/is constituent parts/a constituent part of a hydraulic circuit for cooling/lubricating the electric machine (EM) and the transmission (7).

## Revendications

1. Dispositif d'entraînement pour un essieu électrifié d'un véhicule, comprenant un moteur électrique (EM) qui, par l'intermédiaire d'une transmission (7), entraîne des arbres à bride (3, 4) reliés aux roues du véhicule, et un module de refroidissement/lubrification (13) qui alimente le moteur électrique (EM) et/ou la transmission (7) en fluide de refroidissement/lubrification, **caractérisé en ce que** le dispositif d'entraînement présente une structure de boîtier modulaire dans laquelle un boîtier modulaire (33) du module de refroidissement/lubrification (13), un boîtier de stator (2) du moteur électrique (EM) et un boîtier de transmission (6) sont assemblés sous la forme d'éléments métalliques moulés séparés les uns des autres, en particulier des pièces moulées sous pression, sont assemblées pour former un ensemble.

2. Dispositif d'entraînement selon la revendication 1, **caractérisé en ce que** le boîtier de stator (2) est monté par bride sur le boîtier de transmission (6) par une liaison par bride, et **en ce que** le boîtier de stator (2) et le boîtier de transmission (6) forment une zone d'angle intérieur dans laquelle est agencé le boîtier de module (33), et/ou **en ce que** le boîtier de module (33) présente un passage d'arbre (35) à travers lequel s'étend l'un des arbres à bride (3, 4).

3. Dispositif d'entraînement selon la revendication 1 ou la revendication 2, **caractérisé en ce que** le boîtier de transmission (6) est constitué de deux parties de boîtier agencées axialement l'une derrière l'autre, à savoir un boîtier intermédiaire (39) et un couvercle de boîtier (41), et **en ce que** le boîtier de stator (2) et le boîtier de module (33) sont montés par bride sur un côté du boîtier intermédiaire, et **en ce que** le couvercle de boîtier (41) est monté par bride sur le côté axialement opposé du boîtier intermédiaire et ferme l'espace intérieur (40) du boîtier de transmission.

4. Dispositif d'entraînement selon l'une des revendications précédentes, **caractérisé en ce que** le boîtier de stator (2) et le boîtier de module (33) sont espacés l'un de l'autre d'une distance axiale (Δx), et **en ce que** le boîtier de stator (2) et le boîtier de module (33), en particulier sur leur côté éloigné de la transmission, sont reliés entre eux par une pièce d'appui (58) de manière à transmettre les forces.

5. Dispositif d'entraînement selon l'une des revendications précédentes, **caractérisé en ce que** le moteur électrique (EM) est agencé transversalement dans l'axe du véhicule et **en ce que** le boîtier de stator (2) du moteur électrique (EM) s'étend axialement dans la direction transversale (y) du véhicule avec le boîtier de transmission (6), et/ou **en ce que** l'ensemble est soutenu dans la carrosserie du véhicule par un montage à trois points via trois supports d'ensemble.

6. Dispositif d'entraînement selon la revendication 5, **caractérisé en ce que** le boîtier intermédiaire (39) et le couvercle de boîtier (41) présentent chacun des parois de palier (46, 48) qui sont agencées axialement en vis-à-vis, et **en ce que** des arbres de transmission (10, 12, 52) ainsi que des arbres à bride (3, 4) sont montés à rotation notamment dans les parois de palier (46, 48) du boîtier intermédiaire (39) et du couvercle de boîtier (41).

7. Dispositif d'entraînement selon la revendication 5 ou la revendication 6, **caractérisé en ce que** le premier palier de l'ensemble (53) côté transmission est formé sur le couvercle de boîtier (41), **en ce que** le deuxième palier d'ensemble (54) côté transmission est formé sur le boîtier intermédiaire (39), et **en ce que** le troisième palier d'ensemble (55) est formé sur le boîtier de stator (2).

8. Dispositif d'entraînement selon l'une des revendications précédentes, **caractérisé en ce que** l'électronique de puissance (31) du moteur électrique (EM) est agencée sur la face supérieure de l'ensemble d'entraînement, qui recouvre au moins partiellement le boîtier de transmission (6), le boîtier de module (33) et le boîtier de stator (2).

9. Dispositif d'entraînement selon l'une des revendications précédentes, **caractérisé en ce que** chacun des paliers (53, 54, 55) de l'ensemble est conçu sous la forme d'un palier à douille en caoutchouc-métal qui est pressé dans un œillet de fixation (69) du boîtier de transmission (25) et/ou du boîtier de stator (23), et **en ce que** les œillets de fixation des paliers (53, 54, 55) de l'ensemble sont formés d'un seul tenant dans le même matériau sur le boîtier de stator (2), sur le boîtier intermédiaire (39) et sur le couvercle de boîtier (41).

10. Dispositif d'entraînement selon l'une des revendications précédentes, **caractérisé en ce qu'**une unité de pompage (17), un échangeur de chaleur (22), un filtre à huile (24) et/ou un réservoir d'huile (15) sont formés ou montés sur le boîtier de module (33) qui sont des composants d'un circuit hydraulique destiné au refroidissement/à la lubrification du moteur électrique (EM) et de la transmission (7).
